# EUROPEAN PATENT APPLICATION

(11) **EP 1 314 353 A2**
(43) Date of publication of application: **28.05.2003**
(21) Application number: 02425700.8
(22) Date of filing: 15.11.2002
(51) Int. Cl.: A01L 7/02

(54) **A sole made of resilient material**

(30) Priority: 23.11.2001 IT BO20010714
(71) Applicant: Estrusioni Unionplastic S.r.L., 40068 San Lazzaro di Savena (Bologna) (IT)
(72) Inventor: Guerra, Giancarlo, 40139 Bologna (IT); Bartolini, Barbara, 40139 Bologna (IT); Portesan, Giacomo, 18100 Imperia (IT); Orengo, Elena, 18100 Imperia (IT)
(74) Representative: Lanzoni, Luciano

(57) **Abstract**

The protective sole (1) for horses' hooves is made of resilient material and comprises a metal insert (4) coated in the resilient material, the metal insert (4) having means (12) for fixing it to the hoof.

## Description

The present invention relates to a protective sole made of resilient material for the hooves of horses or other equine species.

The use of soles made of plastic and inserted between a horse's hoof and the horseshoe is known. This is intended, both thanks to the relatively large contact surface and the elasticity of the sole, to reduce the impact transmitted to the hoof by the shoe each time it makes contact with the ground as the horse moves.

The sole acts as an element which absorbs said impact in order to lessen the effects on the horse's limb, at muscular, tendon and bone level.

Special types of soles are used for therapeutic purposes.

Application of said soles is often complicated by the fact that they must be fixed to the hoof at the same time as the shoe and, therefore, require the blacksmith to pay continuous attention to prevent them assuming an incorrect position relative both to the hoof and the shoe.

This operation is often also difficult because of the awkward position in which the blacksmith has to operate.

Another disadvantage linked to use of the above-mentioned soles is the fact that gaps are created between the shoe and the sole, which may gather dirt, with obvious negative effects on the horse's health.

The aim of the present invention is to provide a sole for the hooves of horses or similar animals which has none of the above-mentioned disadvantages and which is functional, easy to apply and economical to produce.

Accordingly, the present invention provides a protective sole for the hooves of horses or similar animals, made of resilient material and designed to be attached to the bottom of the hoof, characterised in that it comprises a metal insert at least on an external portion.

The technical characteristics of the invention, with reference to the above aims, are clearly described in the claims below and its advantages are apparent from the detailed description which follows, with reference to the accompanying drawings which illustrate a preferred embodiment of the invention without restricting the scope of the inventive concept, and in which:
- Figure 1 is a top perspective view of a preferred embodiment of the protective sole made according to the present invention;
- Figure 2 is a schematic bottom plan view of the protective sole illustrated in Figure 1;
- Figure 3 is a cross-section according to the arrows III in Figures 2 of the protective sole illustrated in Figures 1 and 2.

With reference to the accompanying drawings, a protective sole for horses' hooves (not illustrated) is labelled 1 as a whole.

In accordance with its normal applicability to a hoof, the protective sole 1 has a front zone 2 and a rear zone 3.

The sole 1, made of resilient material, extends in such a way that it is substantially flat and lies in a plane G.

The sole 1 also has an external profile P which defines the size of the sole 1 and basically reproduces a generic hoof-print.

At its front zone 2, the protective sole 1 comprises a stiffening metal insert 4 consisting of a plate 5 which, in the plane G in which the sole lies, extends in a "U"-shaped curve, basically reproducing the external curvature of a hoof and occupying a corresponding external portion of the sole 1.

At its front end 4a, the metal insert 4 has a tab 6 projecting from the space occupied by the sole 1 and extending upwards, perpendicular to the plane G in which the sole 1 lies.

The tab 6 is designed to make contact and engage with a front end, not illustrated, of the hoof.

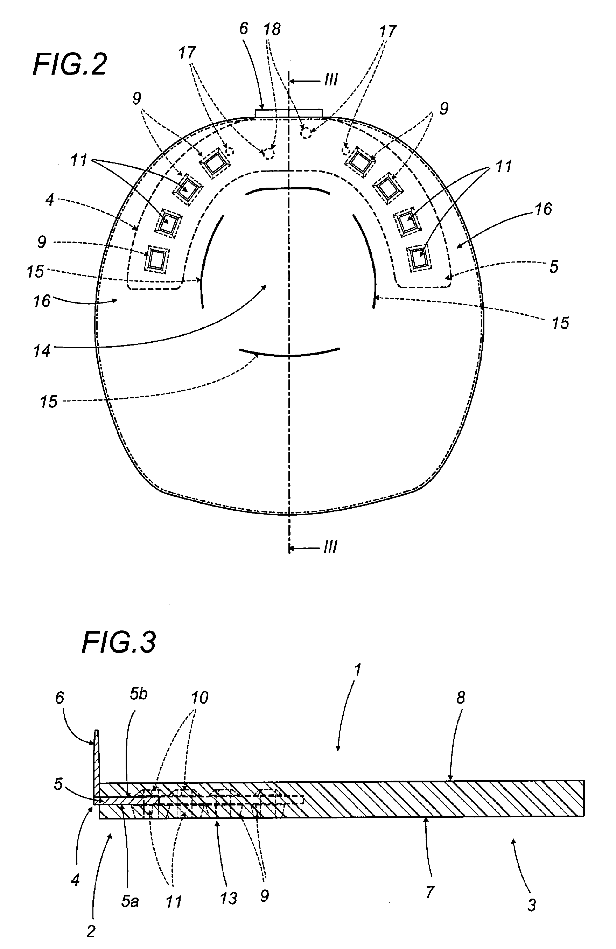

With reference to Figure 3, the sole 1 has a first, lower surface 7, designed to make contact with the ground, and a second, upper surface 8 designed to make contact with the hoof. The front and rear surfaces 7, 8 are parallel with one another and with the plane G in which the sole lies.

As illustrated in Figure 3, the plate 5 has a first, lower face 5a and a second, upper face 5b. From the first, lower face 5a of the plate 5 there extends a plurality of projections 9 having the shape of truncated pyramids, which narrow towards the lower surface 7 of the sole 1.

On the opposite side to the truncated pyramid projections 9, the plate 5 has a plurality of flared projections 10, each corresponding to a truncated pyramid projection 9.

The truncated pyramid projections 9 and the corresponding flared projections 10 are hollow and, inside, have holes 11 which pass through the plate 5.

The holes 11 through the plate 5 are means 12 for fixing the protective sole 1 to the hoof.

The truncated pyramid projections 9 and flared projections 10, together with the through-holes 11 constitute guide elements 13 for nails (not illustrated) used to fix the sole 1 to the hoof, which is not illustrated.

At a central portion 14, the front of which is delimited by the plate 5, the sole 1 has a plurality of incisions 15 designed to facilitate the removal of at least part of the central portion 14 in accordance with given requirements arising during application of the protective sole 1 to the hoof.

Advantageously, in an alternative embodiment, which is not illustrated, the incisions 15 are substituted with one or more substantially continuous pre-cutting lines.

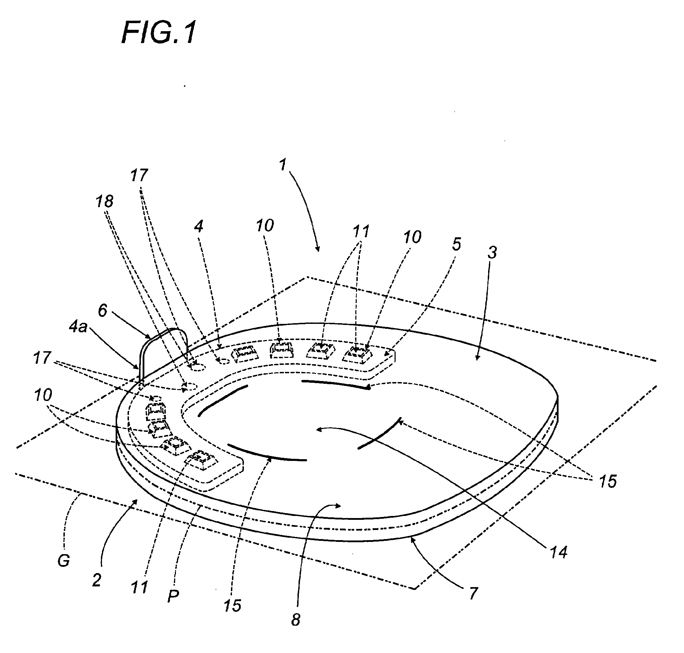

As illustrated in Figures 1 and 2, between the maximum size external profile P and the plate 5, the sole 1 has an external edge 16 made entirely of resilient material, this edge 16 being designed to be removed, when applying the sole 1 to the hoof, to adapt the size of the sole to that of the hoof.

As illustrated in the accompanying drawings, the plate 5 has through-openings 17 for locking the plate 5 to the resilient material used to make the protective sole 1.

In other words, during production of the sole 1 by moulding it around the metal insert 4, in special moulds, the through-openings 17, by filling with the resilient material used to make the sole 1, allow the formation of portions which connect and secure the plate 5 to the body of the sole 1.

The through-openings 17, together with the projections 9 and 10, constitute means 18 which secure the metal insert 4 to the body of the sole 1 made of resilient material.

In practice, the protective sole 1 is applied to a horse's hoof with nails, as is the normal technique for shoeing horses.

The nails, not illustrated, are inserted in the through-holes 11 and the truncated pyramid-shaped hole cavity is designed to hold the square countersunk head of the normal nails used for this purpose.

The tab 6 is then clinched against the angled front wall of the hoof which normally forms an acute angle to the plane G in which the sole 1 lies.

After the protective sole 1 has been connected to the hoof, the outer edge 16 is finished by removing, for example by filing or cutting, any excess material relative to the shape of the hoof.

Filing material off the edge 16 guarantees excellent sole 1 versatility. In contrast to the normal hoof protection devices which must be available in many different sizes, this allows a very limited number of sole sizes to cover all hoof sizes.

The different sized soles 1 may relate exclusively to the size of the metal insert 4 inside them. The insert 4, of any size, is advantageously coated in the same mould for all soles 1, with obvious economic advantages deriving from the fact that the operations required to produce the various sole 1 sizes can be standardised.

During sole 1 application, due to particular requirements or hoof features, such as the presence of a bulge or a corn on the inside, the central portion 14 of the sole 1 can easily be removed, completely or partially, thanks to the incisions 15 in it.

In other words, the incisions 15 form pre-fracture lines or zones.

Advantageously, the upper surface 8 of the protective sole 1 is treated with disinfectant and/or fungicide and/or anti-bacterial substances and/or substances for curing diseases of the horse's limbs.

Advantageously, the lower surface 7 of the protective sole 1 is coarse or, in other words, very rough, to improve the grip of the sole 1 on the ground.

In alternative embodiments which are not illustrated, the lower surface 7 of the protective sole 1 has protrusions designed to improve the grip of the sole 1 on the ground.

Therefore, advantageously, the sole 1 can be applied to the horse's hoof without a horseshoe, having obvious benefits not only in terms of ease of application, but also, for example, the significant reduction in the mass applied to the horse's limb.

The invention described can be subject to modifications and variations without thereby departing from the scope of the inventive concept. Moreover, all the details of the invention may be substituted by technically equivalent elements.

## Claims

1. A protective sole for the hooves of horses or similar animals, made of resilient material and designed to be attached to the bottom of the hoof, **characterised in that** it comprises a metal insert (4) positioned at least at a substantially external zone.

2. The sole according to claim 1, **characterised in that** the metal insert (4) is coated with the resilient material.

3. The sole according to either of the foregoing claims, **characterised in that** it comprises means (12) for fixing it to the hoof.

4. The sole according to claim 3, **characterised in that** the fixing means comprise a plurality of through-holes (11) made at least in the metal insert (4).

5. The sole according to any of the foregoing claims, **characterised in that** the metal insert (4) comprises a tab (6) designed to engage by making contact with a front portion of the hoof.

6. The sole according to any of the foregoing claims, **characterised in that** the metal insert (4) comprises a plate (5) with upper and lower faces (5a, 5b), at least one of the faces (5a, 5b) of the plate (5) having a plurality of hollow projections (9) designed to form the fixing means (12) and to constitute guide elements (13) for nails used to fix the sole (1) to the hoof.

7. The sole according to any of the foregoing claims, **characterised in that** it has incisions (15) to facilitate the removal of portions (14) of the sole (1) in order to adapt the shape of the sole to the given hoof shape and dimensions.

8. The sole according to any of the foregoing claims, **characterised in that** the metal insert (4) only engages with a front zone (2) of the hoof.

9. The sole according to any of the foregoing claims, **characterised in that** the metal insert (4) comprises means (18) for fixing it to the resilient material used to make the sole (1).

10. The sole according to claim 8, **characterised in that** the fixing means (18) comprise at least one through-opening (17) in the metal insert (4).

11. The sole according to any of the foregoing claims, **characterised in that**, at its lower surface (7) it comprises at least one protrusion for improving the grip of the sole (1) on the ground.

12. The sole according to any of the foregoing claims, **characterised in that** the lower surface (7) is made coarse in order to increase the grip of the sole (1) on the ground.

13. The sole according to any of the foregoing claims, **characterised in that** its upper surface (8) is treated with curative substances for the hoof or the horse's limbs.
